# EUROPEAN PATENT APPLICATION

(11) **EP 4 086 303 A1**
(43) Date of publication of application: **09.11.2022**
(21) Application number: 20908694.1
(22) Date of filing: 28.12.2020
(51) Int. Cl.: C08K 5/12, C08K 5/00, C09J 201/00

(54) **PLASTICIZER COMPOSITION, AND SEALANT/ADHESIVE COMPOSITION COMPRISING SAME**

(30) Priority: 31.12.2019 KR 20190179513; 24.12.2020 KR 20200183729
(71) Applicant: Hanwha Solutions Corporation, Jung-gu Seoul 04541 (KR)
(72) Inventor: KWAK, Hee-La, Daejeon 34128 (KR); KIM, Jaesong, Daejeon 34128 (KR); RYOO, Sungmin, Daejeon 34128 (KR); YOO, Myung-Ik, Daejeon 34128 (KR)
(74) Representative: Berggren Oy
(86) International application number: PCT/KR2020/019171
(87) International publication number: WO 2021/137541

(57) **Abstract**

Provided are a plasticizer composition which is eco-friendly and exhibits excellent viscosity-controlling effect, processability, low-temperature properties, and migration resistance, and sealant/adhesive compositions including the same.

## Description

### [Technical Field]

### Cross-reference to Related Application

The present application is based on, and claims priority from, Korean Patent Application Nos. 10-2019-0179513 and 10-2020-0183729, filed on December 31, 2019 and December 24, 2020, respectively, the disclosures of which are hereby incorporated by reference herein in their entirety.

The present invention relates to a plasticizer composition which is eco-friendly due to the absence of a phthalate plasticizer and exhibits excellent viscosity-controlling effect, processability, low-temperature properties, and migration resistance, and sealant/adhesive compositions including the same.

### [Background Art]

Plasticizers as polymer additives are used to adjust hardness or softness, to impart staining resistance, and to modify tensile properties (e.g., strength, elongation, or elasticity) and processability.

In general, an adhesive or sealant composition used in construction, civil engineering, etc. includes a plasticizer as a main component, together with a resin such as polyurethane, polyurea, polyacrylate, etc. The plasticizer used in the adhesive or sealant composition functions to reduce hardness of a polymer, to compatibilize a mixture of a polymer and a filler, to increase low-temperature elasticity, and to increase expandability of a produced film.

On the other hand, as the existing plasticizers which have been used in adhesive or sealant compositions, phthalate-based plasticizers such as dibutyl phthalate (DBP) have been mainly used, which are able to improve processability due to easy control of viscosity and to improve cold resistance by lowering a glass transition temperature. However, phthalate-based plasticizers are endocrine disruptors that interfere with or disrupt human hormone action, and are suspected as an environmental hormone. For this reason, there is a movement to regulate the phthalate-based plasticizers.

Accordingly, there is a demand for the development of eco-friendly non-phthalate-based plasticizers having physical properties equal to or better than those of the phthalate-based plasticizers, as alternatives to the phthalate-based plasticizers.

### [Disclosure]

### [Technical Problem]

There are provided a plasticizer composition which is eco-friendly due to the absence of a phthalate-based plasticizer and exhibits physical properties equal to or better than those of the existing phthalate-based plasticizers, and sealant/adhesive compositions including the same.

### [Technical Solution]

According to one embodiment of the present invention, there is provided a plasticizer composition including:
di(2-ethylhexyl)cyclohexane-1,4-dicarboxylate;
dibutylcyclohexane-1,2-dicarboxylate; and
a compound represented by the following Chemical Formula 1,
wherein the di(2-ethylhexyl)cyclohexane-1,4-dicarboxylate is included in an amount of 10 parts by weight to 85 parts by weight, based on 100 parts by weight of the plasticizer composition: 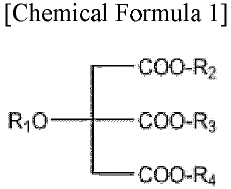 in Chemical Formula 1,
R₁ is hydrogen or acetyl, and
R₂ to R₄ are each independently a C₂₋₈ alkyl.

According to another embodiment of the present invention, there is provided a sealant/adhesive composition including: a polyol compound; an isocyanate compound; and the plasticizer composition of the present invention.

### [Effect of the Invention]

A plasticizer composition of the present invention is eco-friendly due to the absence of phthalate, exhibits a viscosity-controlling effect suitable for use in adhesive compositions, has little change in viscosity over time, and has excellent cold resistance. In addition, the plasticizer composition of the present invention has excellent migration resistance, and has low volatilization and odor, and therefore it may be suitably applied to an eco-friendly adhesive or sealant.

Accordingly, an adhesive composition including the plasticizer composition of the present invention has excellent physical properties such as viscosity, long-term storage stability, cold resistance, etc., and therefore it may be usefully applied to adhesives or sealants in the fields such as construction, civil engineering, automobiles, ship structures, etc.

### [Best Mode for Carrying Out the Invention]

The terms used in this description are just for explaining exemplary embodiments and it is not intended to restrict the present invention. The singular expression may include the plural expression unless it is differently expressed contextually. It must be understood that the term "include", "equip", or "have" in the present description is only used for designating the existence of characteristics taken effect, steps, components, or combinations thereof, and do not exclude the existence or the possibility of addition of one or more different characteristics, steps, components, or combinations thereof beforehand.

The present invention may be variously modified and have various forms, and specific embodiments will be illustrated and described in detail as follows. It should be understood, however, that the description is not intended to limit the present invention to the particular forms disclosed, but on the contrary, the intention is to cover all modifications, equivalents, and alternatives falling within the spirit and scope of the present invention.

### Plasticizer Composition

A plasticizer composition according to the present invention includes: di(2-ethylhexyl)cyclohexane-1,4-dicarboxylate; dibutylcyclohexane-1,2-dicarboxylate; and a compound represented by the following Chemical Formula 1, wherein the di(2-ethylhexyl)cyclohexane-1,4-dicarboxylate is included in an amount of 10 parts by weight to 85 parts by weight, based on 100 parts by weight of the plasticizer composition: 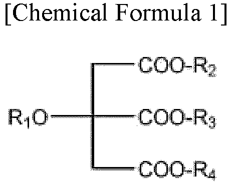 in Chemical Formula 1,
R₁ is hydrogen or acetyl, and
R₂ to R₄ are each independently a C₂₋₈ alkyl.

The plasticizer composition according to the present invention is excellent in terms of viscosity-controlling effect, cold resistance, volatility, and migration resistance due to the interaction of three or more kinds of plasticizers. Further, the plasticizer composition is eco-friendly due to the absence of a phthalate-based plasticizer while exhibiting remarkably improved processability, as compared to phthalate-based plasticizers.

The plasticizer composition of the present invention includes di(2-ethylhexyl)cyclohexane-1,4-dicarboxylate (DEHCH) represented by the following Chemical Formula 2-1 as a cyclohexane dicarboxylate-based compound:

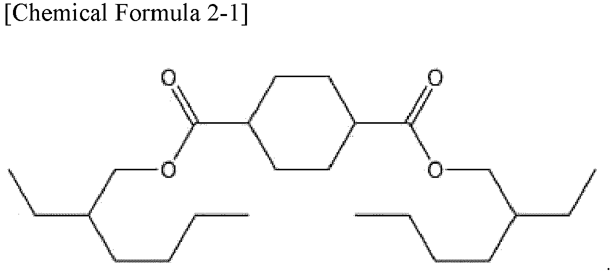

DEHCH has a low viscosity at room temperature and low temperatures to implement excellent coating properties, and has a fast gelling rate and excellent foaming properties. As described, DEHCH has an advantage of minimizing the generation of volatile organic compounds while exhibiting physical properties close to those of the existing phthalate-based plasticizers.

However, as compared to the existing phthalate-based plasticizers such as dibutyl phthalate, etc., DEHCH has disadvantages of lacking the effect of improving the viscosity and having a large change in the viscosity during long-term storage. Accordingly, to compensate for the disadvantages of DEHCH, the plasticizer composition of the present invention further includes dibutylcyclohexane-1,2-dicarboxylate (DBCH) represented by the following Chemical Formula 2-2, which is another cyclohexane dicarboxylate-based compound, and a citrate-based compound represented by Chemical Formula 1:

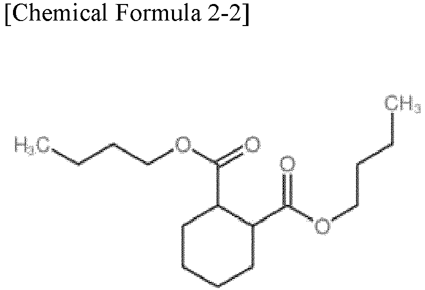

DBCH has a lot of volatilization at high temperatures, and thus there is a limit to securing physical properties as a plasticizer when used alone. Nevertheless, since DBCH has excellent viscosity-controlling effect and cold resistance, it may partially supplement the physical properties of DEHCH when used together with DEHCH.

Meanwhile, the compound of Chemical Formula 1 is included to supplement the thickening effect of the plasticizer composition and to reduce the rate of change in the viscosity over time during long-term storage. As confirmed in examples to be described later, when two kinds of compounds, DEHCH and DBCH, are only used, sufficient viscosity may not be obtained, and there is a problem of a great change in the viscosity over time during long-term storage. These problems may be solved by including the compound of Chemical Formula 1.

The compound represented by Chemical Formula 1 may be an ester compound prepared by the reaction of citric acid and a C₂₋₈ alcohol. In Chemical Formula 1, R₂ to R₄ are preferably each independently butyl or octyl.

A representative example of the compound represented by Chemical Formula 1 is tributylcitrate, tri(butyloctyl)citrate, trioctylcitrate, or acetyltributylcitrate. Here, tri(butyloctyl)citrate collectively refers to compounds, in which some of R₂ to R₄ in Chemical Formula 2 are butyl compounds and some are octyl compounds. In one preferred embodiment, the compound represented by Chemical Formula 1 may be tributylcitrate.

The compound represented by Chemical Formula 1 may be purchased from commercially available sources, and may also be prepared by a method as in the following Reaction Scheme 1.

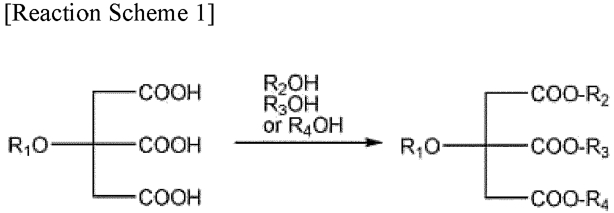

The reaction is an esterification reaction of citric acid or acetylcitric acid and a C₂₋₈ alcohol, and the compound may be prepared by performing a single reaction or by sequentially performing the reaction by changing the reactants according to the structures of R₂ to R₄. As the conditions for the reaction, esterification reaction conditions common in the art may be used.

Meanwhile, the plasticizer composition of the present invention includes DEHCH in an amount of 10 parts by weight to 85 parts by weight, based on 100 parts by weight of the plasticizer composition. When the content of DEHCH is less than 10 parts by weight, based on 100 parts by weight of the plasticizer composition, loss of the plasticizer by volatilization and migration of the plasticizer may increase, and there may be a problem in that the plasticizer is lost during processing with increasing volatilization of the plasticizer. On the contrary, when the content of DEHCH is too high by exceeding 85 parts by weight, based on 100 parts by weight of the plasticizer composition, the contents of DBCH and the compound of Chemical Formula 1 in the plasticizer composition are relatively low, and thus there are problems in that the viscosity of the plasticizer composition decreases and the viscosity during long-term storage may greatly increase, and cold resistance may decrease.

In one preferred embodiment, DEHCH may be included in an amount of 20 parts by weight or more, 30 parts by weight or more, or 35 parts by weight or more, and 80 parts by weight or less, 70 parts by weight or less, or 50 parts by weight or less, based on 100 parts by weight of the plasticizer composition.

Further, the plasticizer composition of the present invention may include DBCH in an amount of 9 parts by weight or more, 15 parts by weight or more, 20 parts by weight or more, or 30 parts by weight or more, and 50 parts by weight or less, or 40 parts by weight or less, based on 100 parts by weight of the plasticizer composition.

When the content of DBCH is less than 9 parts by weight, based on 100 parts by weight of the plasticizer composition, the compound of Chemical Formula 1 must be excessively used in order to secure a sufficient thickening effect, which may cause a problem of the peculiar smell of citric acid. Further, when the content of DBCH exceeds 50 parts by weight, based on 100 parts by weight of the plasticizer composition, the volatilization amount of the plasticizer may increase, and accordingly, the physical properties of the plasticizer may change during storage, and there is a problem in that migration of the plasticizer is large, which is not preferred.

Meanwhile, the compound represented by Chemical Formula 1 may be included in an amount of 1 part by weight or more, 5 parts by weight or more, 10 parts by weight or more, or 20 parts by weight or more, and 30 parts by weight or less, based on 100 parts by weight of the plasticizer composition.

When the amount of the compound represented by Chemical Formula 1 is less than 1 part by weight, based on 100 parts by weight of the plasticizer composition, DBCH must be excessively used in order to adjust viscosity and to lower Tg. In this case, there is a high possibility that loss of the plasticizer may occur during high-temperature processing and the overall physical properties of the product may deteriorate. In addition, the compound represented by Chemical Formula 1 has a disadvantage of a bad odor, and when the content is too high, the volatilization amount of the plasticizer may increase, and there is a possibility that the mechanical strength may decrease due to the loss of the plasticizer. Thus, it is preferable that the content does not exceed 30 parts by weight, based on 100 parts by weight of the plasticizer composition.

In one preferred embodiment, the plasticizer composition of the present invention may include 10 parts by weight to 85 parts by weight of DEHCH, 9 parts by weight to 50 parts by weight of DBCH, and 1 part by weight to 30 parts by weight of the compound of Chemical Formula 1, based on 100 parts by weight thereof. In this regard, the compound of Chemical Formula 1 may be tributylcitrate or acetyltributylcitrate.

In one preferred embodiment, the plasticizer composition of the present invention may include 30 parts by weight to 70 parts by weight of DEHCH, 20 parts by weight to 50 parts by weight of DBCH, and 10 parts by weight to 30 parts by weight of the compound of Chemical Formula 1, based on 100 parts by weight thereof. In this regard, the compound of Chemical Formula 1 may be tributylcitrate or acetyltributylcitrate.

In one preferred embodiment, the plasticizer composition of the present invention may include 35 parts by weight to 50 parts by weight of DEHCH, 30 parts by weight to 40 parts by weight of DBCH, and 20 parts by weight to 30 parts by weight of the compound of Chemical Formula 1, based on 100 parts by weight thereof. In this regard, the compound of Chemical Formula 1 may be tributylcitrate or acetyltributylcitrate.

On the other hand, the content ratio of DEHCH and DBCH is not particularly limited, as long as they are used in the above-described content range. For example, the weight ratio of DEHCH:DBCH is in the range of 3: 1 to 1:1, in the range of 2:1 to 1:1, or in the range 1.7:1 to 1:1. When the content of DEHCH is equal to or higher than that of DBCH, it is preferable because migration of the plasticizer and loss thereof due to volatilization may be reduced.

The above-described plasticizer composition of the present invention includes three or more plasticizers of DEHCH, DBCH, and the compound of Chemical Formula 1 at the same time, thereby exhibiting excellent thickening effect, cold resistance, volatility, and migration resistance even without including a phthalate-based plasticizer. Therefore, the plasticizer composition of the present invention may be suitably used in sealant or adhesive compositions.

### Sealant/Adhesive Compositions

According to another embodiment of the present invention, there is provided a sealant or adhesive composition including: a polyol compound; an isocyanate compound; and the above-described plasticizer composition of the present invention.

The polyol compound is not particularly limited as long as it is known in the art as a raw material for polyurethane. Specifically, the polyol compound may be: polyether-type polyols such as polypropylene glycol or modified products thereof, polytetramethylene glycol, polyethylene glycol, etc.; polyester-type polyols such as poly(hexamethylene adipate), poly(caprolactone), etc.; polycarbonate polyol; polybutadiene polyol; or a combination thereof, but is not limited thereto.

The isocyanate compound may be, for example, one or more selected from the group consisting of diphenylmethane-4,4'-diisocyanate, toluene diisocyanate, methylenediphenyl diisocyanate, 4,4'-diphenyldimethylmethane diisocyanate, xylene diisocyanate, 1,5-naphthalene diisocyanate, isophorone diisocyanate, hexamethylene diisocyanate, isopropylene diisocyanate, methylene diisocyanate, trimethylhexamethylene diisocyanate, pyridine diisocyanate, and methylcyclohexane diisocyanate.

The polyol compound and the isocyanate compound may be included such that the equivalent ratio (NCO/OH) of the isocyanate group and the hydroxyl group is in the range of 1:1 to 1:5. When the ratio of isocyanate is too high or too low, the mechanical properties required as an elastic adhesive may not be secured.

The plasticizer composition included in the sealant or adhesive composition of the present invention is the above-described plasticizer composition of the present invention. Specifically, the plasticizer composition includes: di(2-ethylhexyl)cyclohexane-1,4-dicarboxylate; dibutylcyclohexane-1,2-dicarboxylate; and the compound represented by the following Chemical Formula 1, wherein the di(2-ethylhexyl)cyclohexane-1,4-dicarboxylate is included in an amount of 10 parts by weight to 85 parts by weight, based on 100 parts by weight of the plasticizer composition: 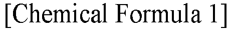 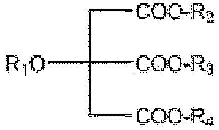 in Chemical Formula 1,
R₁ is hydrogen or acetyl, and
R₂ to R₄ are each independently a C₂₋₈ alkyl.

A detailed description of the plasticizer composition is the same as described in the 'plasticizer composition' section.

The plasticizer composition may be included in an amount of 1 part by weight to 50 parts by weight, or 5 parts by weight to 30 parts by weight, based on 100 parts by weight of the sealant or adhesive composition. When the content of the plasticizer composition in the adhesive composition is too low, hardness of a coating film increases after curing of the adhesive composition, and there is a problem of difficult processing. When the content of the plasticizer composition is too high, there may be a problem in that adhesiveness and mechanical properties become poor. Therefore, it is preferable to satisfy the above range.

The sealant or adhesive composition may further include a chain extender, a crosslinking agent, a diluent, a catalyst, a filler, a foaming agent, a pigment, etc., as needed.

The chain extender is added to change the strength and hardness of the adhesive composition. For example, diols such as ethylene glycol, propylene glycol, 1,4-butanediol, etc.; and diamines such as hexamethylenediamine, m-phenylenediamine, etc. may be used.

The crosslinking agent is a multifunctional compound used to increase mechanical strength by improving crosslinking between chains. Glycerin, trimethylolpropane, pentaerythritol, oxypropylated ethylenediamine, triethanolamine, etc. may be used. However, the present invention is not limited thereto.

As the diluent, one or more of trimellitic acid ester (trimellitate), benzoic acid ester, ethyl cyclohexane, 2,2,4-trimethyl-1,3-pentanediol diisobutyrate, and dimethyl carbonate (DMC) may be used.

As the catalyst, tertiary amines such as dimethylcyclohexylamine, tetramethylenediamine, pentamethylenediethylenediamine, tetraethylenediamine, etc.; or imidazole organometallic compound-type catalysts, may be used.

As the filler, any filler known in the art may be used, and the filler is not particularly limited. For example, it may be calcium carbonate, carbon black, titanium oxide, kaolin, aluminum oxide, silica, PVC powder or hollow beads, or a mixture thereof.

The amount of the additives used may be appropriately adjusted as needed, but is not particularly limited. The additives may be used, for example, in an amount of 1 part by weight to 10 parts by weight, or 0.5 parts by weight to 30 parts by weight, respectively, based on 100 parts by weight of the sealant or adhesive composition.

Meanwhile, in the sealant or adhesive composition, the polyol compound and the isocyanate compound may be included in the form of a prepolymer. In this regard, the prepolymer may further include the above-described additives depending on the use.

The above-described sealant or adhesive composition of the present invention includes the plasticizer composition including DEHCH, DBCH, and the compound of Chemical Formula 1, and thus has excellent viscosity characteristics and low glass transition temperature, thereby having excellent cold resistance, volatility, and plasticizer migration resistance.

The viscosity of the sealant or adhesive composition may satisfy 40,000 cps to 65,000 cps, or 45,000 cps to 59,000 cps, at 25 °C, and thus its processability is excellent. Accordingly, the sealant or adhesive composition may be suitably applied to adhesives/sealants for construction, building materials, industry, etc. The viscosity may be measured using a viscometer (e.g., a Brookfield viscometer) as in examples to be described later. Since the sealant or adhesive composition of the present invention shows little change in the viscosity over time, it may satisfy the above-described range of viscosity even during long-term storage.

As described above, the sealant or adhesive composition of the present invention is eco-friendly and has excellent properties such as processability, long-term storage stability, cold resistance, etc., as compared to the existing adhesive or sealant composition. Accordingly, the sealant or adhesive composition may be appropriately applied to adhesives or sealants in the fields of construction, civil engineering, automobiles, ship structures, etc.

Hereinafter, the present invention will be described in more detail with reference to examples. However, the following examples are only for illustrating the present invention, and the detailed description of the present invention is not limited by the following examples. In addition, in the following examples and comparative examples, "%" and "parts" indicating the content are "%" by weight and "parts" by weight unless otherwise specified.

### [Example]

### Example 1

A plasticizer composition, in which di(2-ethylhexyl)cyclohexane-1,4-dicarboxylate (DEHCH) dibutylcyclohexane-1,2-dicarboxylate (DBCH) tributylcitrate (TBC) were mixed at a weight ratio of 50:30:20, was added in an amount of 12 parts by weight, based on 100 parts by weight of a mixture, in which toluene diisocyanate and polypropylene glycol were mixed in an equivalent ratio of 1:2, and mixed at room temperature (25 °C) for 1 hour at a speed of 1000 rpm to prepare an adhesive composition.

### Example 2

A plasticizer composition, in which di(2-ethylhexyl)cyclohexane-1,4-dicarboxylate (DEHCH) dibutylcyclohexane-1,2-dicarboxylate (DBCH) tributylcitrate (TBC) were mixed at a weight ratio of 35:35:30, was added in an amount of 12 parts by weight, based on 100 parts by weight of a mixture, in which toluene diisocyanate and polypropylene glycol were mixed in an equivalent ratio of 1:2, and mixed at room temperature (25 °C) for 1 hour at a speed of 1000 rpm to prepare an adhesive composition.

### Example 3

A plasticizer composition, in which di(2-ethylhexyl)cyclohexane-1,4-dicarboxylate (DEHCH) dibutylcyclohexane-1,2-dicarboxylate (DBCH) acetyltributylcitrate (ATBC) were mixed at a weight ratio of 50:30:20, was added in an amount of 12 parts by weight, based on 100 parts by weight of a mixture, in which toluene diisocyanate and polypropylene glycol were mixed in an equivalent ratio of 1:2, and mixed at room temperature (25 °C) for 1 hour at a speed of 1000 rpm to prepare an adhesive composition.

### Comparative Example 1

An adhesive composition was prepared in the same manner as in Example 1, except that a weight ratio of DEHCH : DBCH : TBC in the plasticizer composition was 90:5:5.

### Comparative Example 2

An adhesive composition was prepared in the same manner as in Example 1, except that a weight ratio of DEHCH : DBCH : TBC in the plasticizer composition was 5:60:35.

### Comparative Example 3

An adhesive composition was prepared in the same manner as in Example 1, except that a weight ratio of DEHCH : DBCH : TBC in the plasticizer composition was 50:50:0 (TBC not included).

### [Experimental Example]

With respect to each of the adhesive compositions of examples and comparative examples, viscosity, glass transition temperature, volatility, plasticizer migration resistance, and odor were evaluated as follows, and the results are summarized in Table 1 below.

### (1) Viscosity

Viscosity of each of the adhesive compositions of examples and comparative examples after stabilizing at 25°C for 1 day and viscosity thereof after leaving at 25°C for 14 days were measured.

Specifically, the viscosity was measured using a Brookfield viscometer (#6 spindle, 10 rpm), respectively.

### (2) Glass transition temperature (Tg)

Glass transition temperature was measured by differential scanning calorimetry (DSC).

### (3) Volatilization loss

Each of the plasticizer compositions was left in a gear oven at 160°C for 4 hours, and the weight loss was measured and compared.

### (4) Migration of plasticizer

Migration of the plasticizer was determined with reference to the ISO 177:1988 (Plastics - Determination of migration of Plasticizer) method. A molding sheet specimen which was cut in a circular shape with a diameter of 50 mm was prepared, and oil paper (PP porous film) and a glass plate were stacked sequentially on the top and bottom of the specimen such that the plasticizer migrated from the specimen was allowed to be absorbed by the oil paper. After applying a load of 5 kg on the specimen and leaving it in an oven at 70 °C for 5 days, the reduced weight change rate (%) of the specimen was measured to analyze the migration of the plasticizer.

The weight change rate of the specimen was calculated according to [(weight change of specimen / weight of specimen before test) ^{∗} 100], and the weight change rate of oil paper was calculated according to [(weight change of oil paper / weight of oil paper before test) ^{∗} 100]. The weight loss of the specimen is equal to the weight increase of the oil paper. In this experiment, the migration of the plasticizer was evaluated only with the weight change rate of the specimen.

### (5) Odor

Through a sensory test, odors were compared according to the following order.
(good) ⊚ > O > △ > X (poor)

**[Table 1]**

| | Example 1 | Example 2 | Example 3 | Comparative Example 1 | Comparative Example 2 | Comparative Example 3 |
|---|---|---|---|---|---|---|
| Plasticizer composition (weight ratio) | DEHCH:D BCH:TBC =50:30:20 | DEHCH:D BCH:TBC =35:35:30 | DEHCH:D BCH:ATB C =50:30:20 | DEHCH:DBCH:T BC =90:5:5 | DEHCH:DBCH:TB C =5:60:35 | DEHCH:DBCH =50:50 |
| Tg (°C) | -20.2 | -19.8 | -19.2 | -17.5 | -18.0 | -19.5 |
| Viscosity at 25°C (cps, after 1 day) | 47300 | 48800 | 52600 | 27500 | 47000 | 38000 |
| Viscosity at 25°C (cps, after 14 days) | 48400 | 58500 | 58800 | 35400 | 30400 | 56000 |
| Volatilization^{∗} | O | O | O | O | X | Δ |
| Plasticizer migration resistance^{∗} | O | O | O | O | X | Δ |
| Odor^{∗} | O | O | O | O | X | ⊚ |

| | | | | | | |
|---|---|---|---|---|---|---|
| *(good) ⊚ > O > △ > X (poor) | | | | | | |

Referring to Table 1, it was confirmed that Examples 1 to 3 including the plasticizer composition of the present invention had the low glass transition temperature to exhibit the excellent cold resistance, the appropriate viscosity, and little change in the viscosity over time. It was also confirmed that Examples 1 to 3 had the low plasticizer volatilization, good migration resistance, and less odor.

In contrast, Comparative Example 1 showed the significant reduction in the viscosity characteristics, the significant change in the viscosity over time, and the low cold resistance, due to the excessively high content of DEHCH in the plasticizer. On the contrary, Comparative Example 2 showed poor test results with regard to volatilization, plasticizer migration resistance, odor, etc., due to the excessively low content of DEHCH. Comparative Example 3 including only DEHCH and DBCH without the compound of Chemical Formula 1 showed the low viscosity and the great change in the viscosity over time, unfavorable volatilization, and plasticizer migration resistance.

## Claims

1. A plasticizer composition comprising:
di(2-ethylhexyl )cyclohexane-1, 4-dicarboxylate;
dibutylcyclohexane-1,2-dicarboxylate; and
a compound represented by the following Chemical Formula 1,
wherein di(2-ethylhexyl)cyclohexane-1,4-dicarboxylate is included in an amount of 10 parts by weight to 85 parts by weight, based on 100 parts by weight of the plasticizer composition: 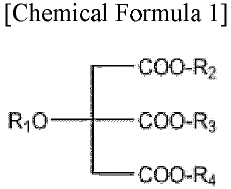 in Chemical Formula 1,
R₁ is hydrogen or acetyl, and
R₂ to R₄ are each independently a C₂₋₈ alkyl.

2. The plasticizer composition of claim 1, wherein R₂ to R₄ are each independently butyl or octyl.

3. The plasticizer composition of claim 1, wherein the compound represented by Chemical Formula 1 is selected from the group consisting of tributylcitrate, tri(butyloctyl)citrate, trioctylcitrate, and acetyltributylcitrate.

4. The plasticizer composition of claim 1, wherein di(2-ethylhexyl)cyclohexane-1,4-dicarboxylate is included in an amount of 30 parts by weight to 70 parts by weight, based on 100 parts by weight of the plasticizer composition.

5. The plasticizer composition of claim 1, wherein dibutylcyclohexane-1,2-dicarboxylate is included in an amount of 9 parts by weight to 50 parts by weight, based on 100 parts by weight of the plasticizer composition.

6. The plasticizer composition of claim 1, wherein the compound represented by Chemical Formula 1 is included in an amount of 1 part by weight to 30 parts by weight, based on 100 parts by weight of the plasticizer composition.

7. The plasticizer composition of claim 1, wherein a weight ratio of di(2-ethylhexyl)cyclohexane-1,4-dicarboxylate and dibutylcyclohexane-1,2-dicarboxylate is 3:1 to 1:1.

8. A composition comprising: a polyol compound; an isocyanate compound; and the plasticizer composition of claim 1.

9. The composition of claim 8, wherein the plasticizer composition is included in an amount of 1 part by weight to 50 parts by weight, based on 100 parts by weight of the composition.

10. The composition of claim 8, further comprising one or more additives selected from a chain extender, a crosslinking agent, a diluent, a catalyst, and a filler.

11. The composition of claim 10, wherein the additive is included in an amount of 1 part by weight to 10 parts by weight, based on 100 parts by weight of the composition.

12. The composition of claim 10, wherein the composition is used as a sealant or adhesive.
